# EUROPEAN PATENT APPLICATION

(11) **EP 4 491 013 A1**
(43) Date of publication of application: **15.01.2025**
(21) Application number: 23766196.2
(22) Date of filing: 10.03.2023
(51) Int. Cl.: A01G 31/02

(54) **IMPROVED AEROPONIC DEVICE**

(30) Priority: 10.03.2022 ES 202230399 U
(71) Applicant: Morfotek, S.L., 03430 Onil Alicante (ES)
(72) Inventor: MOLES MOLES, José, 03430 ONIL (ALICANTE) (ES)
(74) Representative: Isern Patentes y Marcas S.L.
(86) International application number: PCT/ES2023/070137
(87) International publication number: WO 2023/170329

(57) **Abstract**

The present invention relates to an improved aeroponic device with a module having a cylindrical geometry with the axial axis thereof being arranged vertically, with a lower base and an upper cover, the side surface thereof being formed by an assembly of parts with an upper edge, a lower edge, and side edges, parts being arranged contiguously to other parts and assembled together on the edges thereof, generating an inner space in said module; said parts being equipped with a through opening into said module, said opening being arranged with its inlet in relation to the inside of the module at an obtuse, oblique angle of incidence in relation to the axial axis of the module; so that said parts are provided, for the assembly thereof, with means for horizontal connection and simultaneously with other means for vertical connection, which are enabled to provide sealing properties.

## Description

### OBJECT OF THE INVENTION

The object of the present invention application is to register an improved aeroponic device, which incorporates notable innovations and advantages over the techniques used up until now.

More specifically, the invention proposes the development of an improved aeroponic device which, due to its particular arrangement, allows the aeroponic cultivation of plants in conditions that are highly advantageous compared to those known in the state of the art.

### BACKGROUND OF THE INVENTION

Aeroponic cultivations of plants and vegetables are known in the current state of the art, which represent a process of cultivating plants in an aerial or misty environment without using soil, and using water to transmit nutrients.

However, such aeroponic cultivations are susceptible to being substantially improved, particularly with respect to water and nutrient consumption, and without detracting from proper cultivation conditions for various types of vegetables and plants, both in a domestic and a professional setting.

The present invention contributes to solving and resolving the present problem since it allows the aeroponic cultivation of plants in conditions that are highly advantageous compared to those known in the state of the art.

### DESCRIPTION OF THE INVENTION

The present invention has been developed for the purpose of providing an improved aeroponic device, comprising a module having a considerably cylindrical geometry with the axial axis thereof being arranged vertically when in use, with a lower base and an upper cover, the side surface thereof being formed by a mutual assembly of a plurality of parts limited by an upper edge, a lower edge, and side edges, and parts being mutually arranged in a contiguous manner with other parts in contact with the edges thereof and with said parts being mutually connected and assembled on the edges thereof, all of this generating an inner space in said module; said parts being equipped with a through opening into said module, said opening being arranged such that its direction of entry in relation to the inner space of the module has an obtuse, oblique angle of incidence in relation to the axial axis of the module; such that for the assembly thereof said parts are mutually equipped with means for horizontal connection and simultaneously with other means for vertical connection, which are enabled to provide sealing properties; the openings of the parts of the module being enabled for arranging therein aeroponically cultivated plants; wherein the means for horizontal connection have a tongue-and-groove arrangement and are arranged on side edges of the parts, said tongue-and-groove assembly being arranged towards the inside of the module and extending longitudinally and vertically.

Preferably, in the improved aeroponic device, the means for horizontal connection comprise a longitudinal and vertical male projection on a side edge of one part, and at the same time a longitudinal and vertical female recess on another side edge of another part which is horizontally contiguous, the male projection and the female recess being mutually arranged for the fitting of the male projection into the female recess, said fitting generating the tongue-and-groove arrangement.

Alternatively, in the improved aeroponic device, the longitudinal male projection has a bulge extending in the longitudinal dimension thereof, and the female recess has a hollowing also extending in the longitudinal dimension thereof, such that the bulge is also fitted into the hollowing.

Preferably, in the improved aeroponic device, the means for vertical connection comprise a cap centrally arranged on the lower edge of the part and enabled to cover the upper end of the longitudinally and vertically extending tongue-and-groove assembly of two other parts which are in a lower position and horizontally contiguous to one another.

Preferably, in the improved aeroponic device, the means for vertical connection comprise projecting tabs on the lower edge of the part and an anchoring arranged on the upper edge of another vertically contiguous part, so that the tabs and the anchorages are mutually enabled to fit with one another by way of clipping.

Preferably, in the improved aeroponic device, the anchoring is arranged on the upper edge of one part in the central position thereof, and the tabs are arranged at the ends of the lower edge of another part arranged in an upper position, so that the anchoring is mutually enabled for simultaneously fitting two tabs of two other parts which are arranged in an upper position and in turn horizontally contiguous to one another.

Preferably, in the improved aeroponic device, the means for vertical connection comprise flanges on the lower edge of the part and flanking the cap, and ribs on the side edges of the part flanking the tongue-and-groove assembly, so that, in a condition of use, the ribs of two laterally contiguous parts are fitted between the flanges of a part arranged at the top in relation to the two preceding parts.

Additionally, the improved aeroponic device, comprises stiffening means enabled to provide stiffness to the module.

Additionally, in the improved aeroponic device, the stiffening means comprise an internal structure inside the module.

Alternatively, in the improved aeroponic device, said internal structure is simultaneously connected to the lower base and the upper cover.

Additionally, in the improved aeroponic device, said internal structure comprises a system of cables and a system of profiles; so that the system of cables runs along the inside of the module from the lower base to the upper cover; and the system of profiles has a flat arrangement and extension and is fixed and extending in said lower base; the system of cables further being fixed in the upper cover and also fixed in relation to the lower base through the same system of profiles.

Additionally, in the improved aeroponic device, the system of profiles comprises at least two profiles extending along the diameter in the lower base and intersecting mutually and concentrically in relation to said lower base; and the system of cables comprises a cable connected to the mentioned intersection of the profiles and further contained in the axial axis of the module up to the upper cover.

Alternatively, in the improved aeroponic device, the internal structure of the stiffening means comprises longitudinal rods, simultaneously screwed at the ends or tips thereof to the lower base and to the upper cover 13.

Additionally, the improved aeroponic device comprises support means enabled to provide aerial support to the module.

Additionally, in the improved aeroponic device, the support means comprise a ring in the upper cover of the module.

Alternatively, in the improved aeroponic device, the ring is also connected to the system of cables.

Alternatively, in the improved aeroponic device, the system of cables extends and goes through the upper cover and is included in the support means.

Additionally, the improved aeroponic device comprises water and/or nutrient distribution means.

Additionally, in the improved aeroponic device, the water and/or nutrient distribution means comprise a reservoir in the lower base of the module.

Additionally, in the improved aeroponic device, the water and/or nutrient distribution means comprise a fluid drive pump enabled for driving until the upper region of the module.

Additionally, in the improved aeroponic device, the water and/or nutrient distribution means comprise means for pouring fluid by gravity through the inside of the module.

Alternatively, the improved aeroponic device incorporates means for the periodic rotation of the module.

Alternatively, the improved aeroponic device incorporates means for the automatic regulation of time and flow rates for using the water and/or nutrient distribution means.

Additionally, the improved aeroponic device incorporates means for wired or wireless interconnection of said means for the automatic regulation of time and flow rates with other means for automatic control.

Due to the present invention aeroponic cultivation of plants and vegetables is achieved, both in a domestic and a professional setting, in conditions that are highly advantageous compared to those known in the state of the art.

Other features and advantages of the improved aeroponic device will become apparent from the description of a preferred but not exclusive embodiment, illustrated by way of non-limiting example in the attached drawings, in which:

### BRIEF DESCRIPTION OF THE DRAWINGS

Figure 1 is a schematic perspective view of a preferred embodiment of the improved aeroponic device of the present invention.
Figures 2a and 2b are schematic views from different perspectives of a part before the assembly thereof to form a preferred embodiment of the improved aeroponic device of the present invention.
Figure 3 is a schematic perspective view with enlarged detail of a sample of the assembly of the parts, with the means for horizontal connection and the inner tongue-and-groove arrangement thereof, in a preferred embodiment of the improved aeroponic device of the present invention.
Figure 4 is a schematic plan view with enlarged detail of a sample of the assembly of the parts, with the means for horizontal connection and the inner tongue-and-groove arrangement thereof, in a preferred embodiment of the improved aeroponic device of the present invention.
Figures 5, 6, and 7 are schematic perspective views with enlarged detail of samples of the assembly of the parts, with the means for vertical connection, in a preferred embodiment of the improved aeroponic device of the present invention.
Figure 8 is a schematic perspective view of the module without the parts, in order to view the stiffening means of the module, in a preferred embodiment of the improved aeroponic device of the present invention.
Figure 9 is a schematic perspective view in which the cable extends beyond the upper cover, and is therefore also included in the support means, in a preferred embodiment of the improved aeroponic device of the present invention.

### DESCRIPTION OF A PREFERRED EMBODIMENT

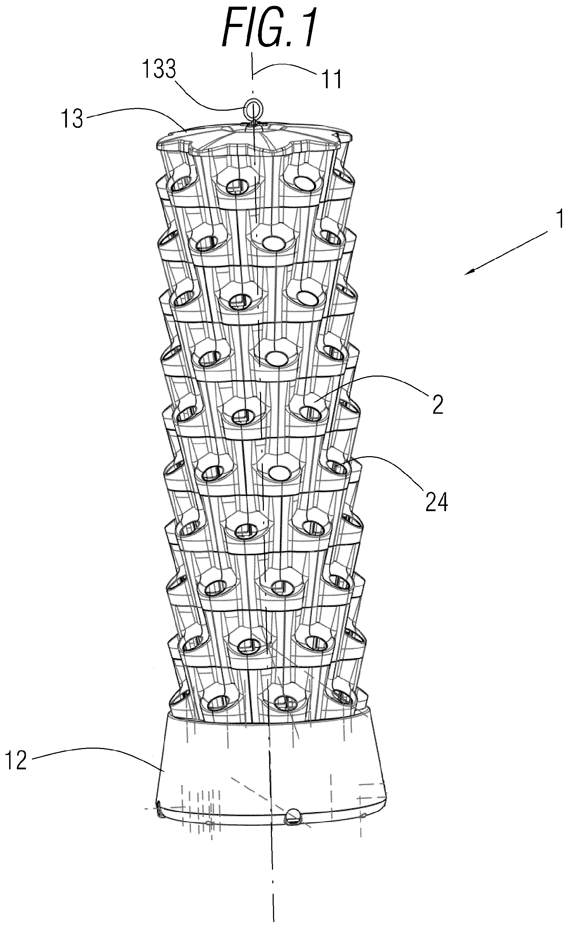

As schematically shown in figure 1, the improved aeroponic device of the proposed invention has a modular assembly arrangement. To that end, the improved aeroponic device of the invention comprises a module 1 having a considerably cylindrical geometry and with the axial axis 11 thereof being vertically arranged when in use.

Said module 1 has a lower base 12 and an upper cover 13, the side surface thereof being formed by a plurality of mutually assembled parts 2.

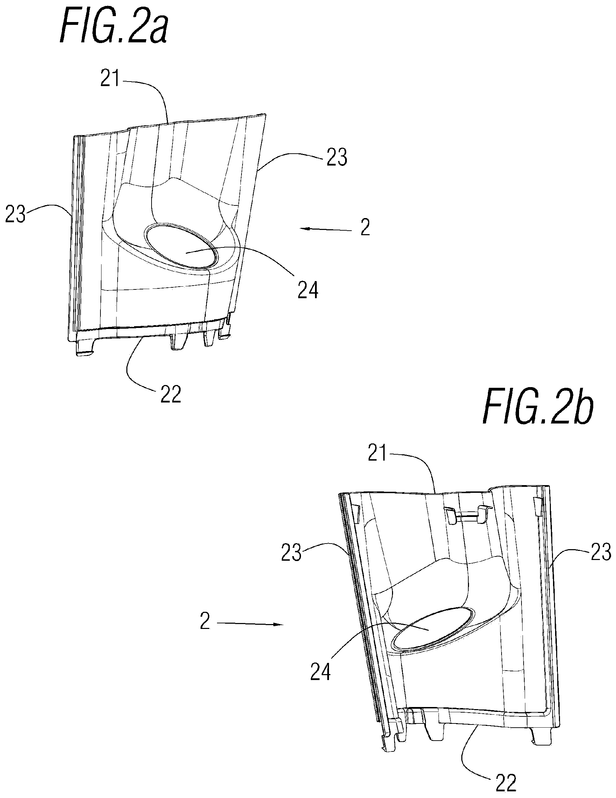

As can be seen schematically in figures 2a and 2b from different perspectives, the parts 2 are limited by an upper edge 21, a lower edge 22, and side edges 23, taking to that end the vertical direction when using the module 1 as a reference.

The parts 2 are mutually arranged contiguous to one another in contact with the upper edge 21, lower edge 22, and side edges 23 thereof, and are mutually connected and assembled to thus form the side surface of the cylindrical module 1, all of this also resulting in the formation of an inner space in said module 1.

Figure 2a shows a view of a part 2 from an outer perspective with respect to the resulting module 1, and in contrast, figure 2b shows a view of the same part 2 from an inner perspective with respect to the resulting module 1.

The parts 2 are equipped with a through opening 24 into said module 1.

The openings 24 of the parts 2 are arranged such that their direction of entry in relation to the inner space of the module 1 has an obtuse, oblique angle of incidence in relation to the axial axis 11 of the module 1, said angle being interpreted counterclockwise, and as can be deduced by observing figure 1.

As a result of this arrangement of the openings 24 of the parts 2, said openings 24 are enabled for arranging therein aeroponically cultivated plants in the same module 1.

Moreover, the parts 2 are mutually equipped with means for horizontal connection and simultaneously with other means for vertical connection, taking the actual axial axis 11 of the module 1 as the vertical direction, to thus ensure a mutual and effective assembly between said parts.

In this preferred embodiment of the improved aeroponic device of the invention, the means for horizontal connection have a tongue-and-groove arrangement and are arranged on side edges 23 of the parts 2, providing sealing properties, the tongue-and-groove assembly thereof being arranged towards the inside of the module 1 and extending longitudinally and vertically, also for the purpose of providing an aesthetic homogeneity of the outer perimeter of the improved aeroponic device of the invention, unlike the solutions of the state of the art.

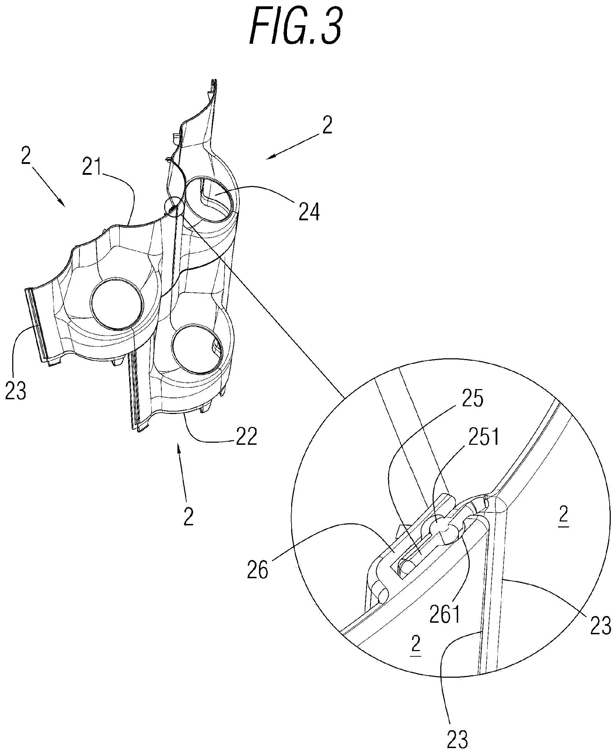

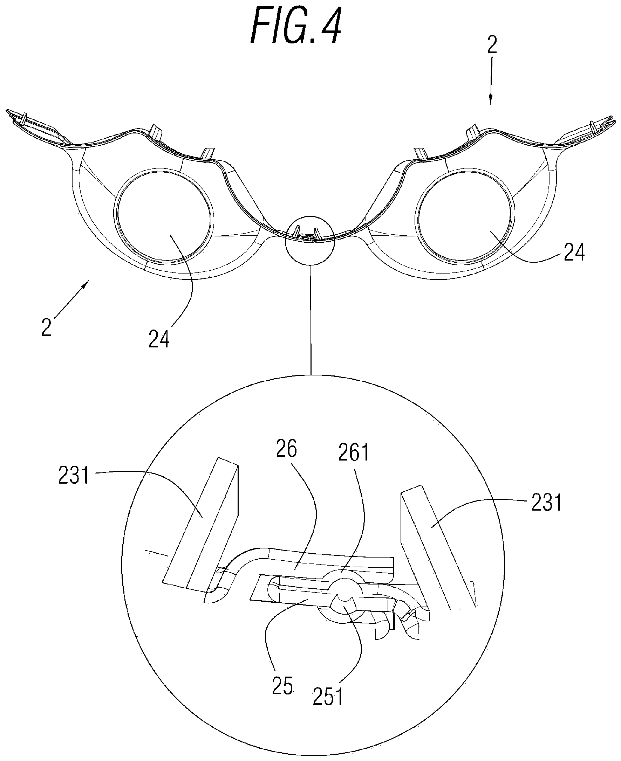

More specifically, as can be seen in the perspective view of figure 3 and in the plan view of figure 4, as well as in the enlarged details thereof, the means for horizontal connection comprise a male projection 25 extending longitudinally and vertically on a side edge 23 of a part 2, and at the same time also comprise a female recess 26 also extending longitudinally and vertically on a side edge 23 of another laterally contiguous part 2.

The male projection 25 and the female recess 26 are mutually arranged for the fitting of the male projection 25 into the female recess 26, said fitting generating the aforementioned tongue-and-groove arrangement which is arranged towards the inside of the module 1 and extending longitudinally and vertically, as can be seen in figures 3 and 4.

Moreover, as can also be seen in the enlarged details of figures 3 and 4, the longitudinal male projection 25 has a bulge 251 extending along the longitudinal dimension thereof, and the female recess 26 has a hollowing 261 also extending along the longitudinal dimension thereof, so that the bulge 251 is also fitted into the hollowing 261, thus ensuring even further the mutual and effective tongue-and-groove assembly between the parts 2 on their side edges 23, and therefore their horizontal connection.

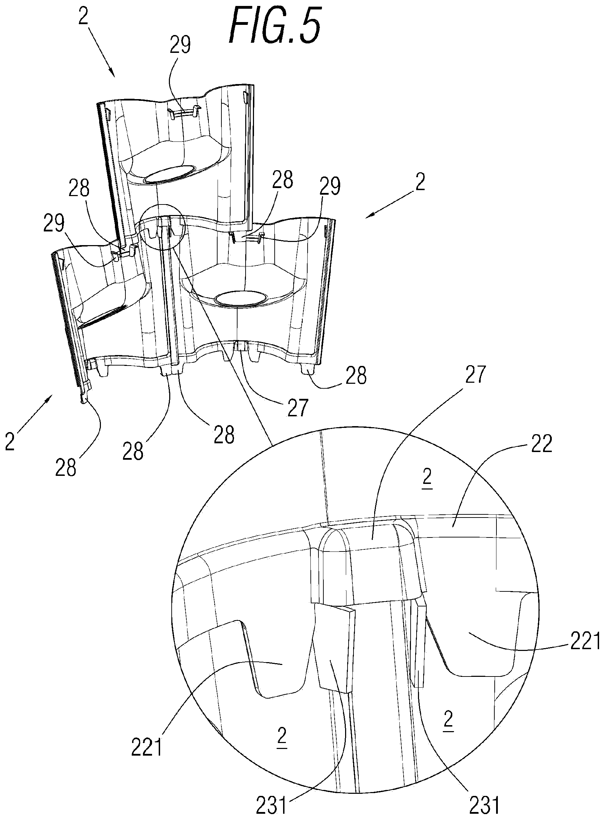

Also in this preferred embodiment of the improved aeroponic device of the invention, and as can be seen in figure 5 and its enlarged detail, the aforementioned means for vertical connection comprise a cap 27 centrally arranged on the lower edge 22 of the part 2, and enabled to cover the upper end of the longitudinally and vertically extending tongue-and-groove assembly of two other lower parts 2 which are in turn horizontally contiguous to one another.

As can also be seen in figures 5, 6, and 7 and also in their enlarged details, in this preferred embodiment, the means for vertical connection also comprise projecting tabs 28 on the lower edge 22 of the part 2 and an anchoring 29 arranged on the upper edge 21 of another vertically contiguous part 2, such that the tabs 28 and the anchorages 29 are mutually enabled to fit with one another by way of clipping.

The means for vertical connection confer sealing properties. In this preferred embodiment, the fitting between the tabs 28 and the anchorages 29 by way of clipping has sealing properties.

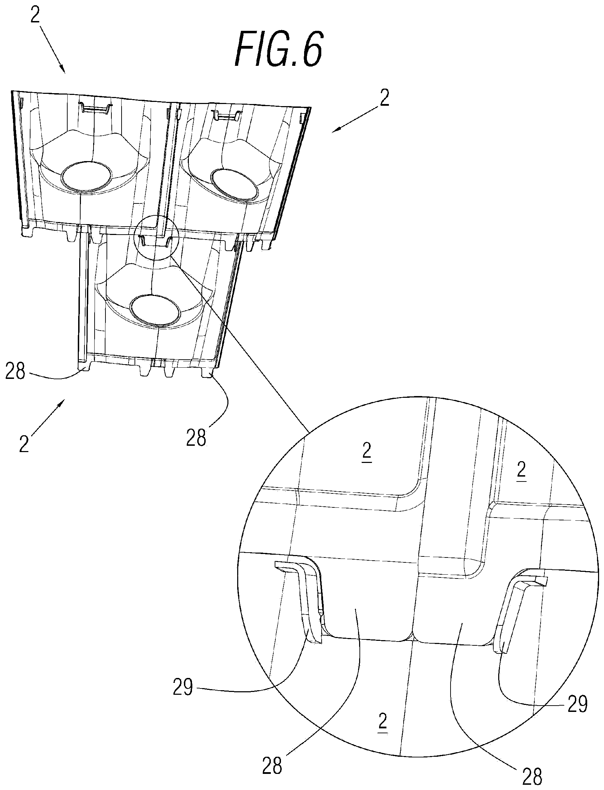

As can be seen in figures 5 and 6 in a view from the inside of the module 1, the anchoring 29 is arranged on the upper edge 21 of a part 2 in the central position thereof, and the tabs 28 are arranged at the ends of the lower edge 22 of two other parts 2 arranged in an upper position, so that the anchoring 29 is mutually enabled for simultaneously fitting two tabs 28 of two other parts 2 arranged in an upper position which are in turn horizontally contiguous to one another.

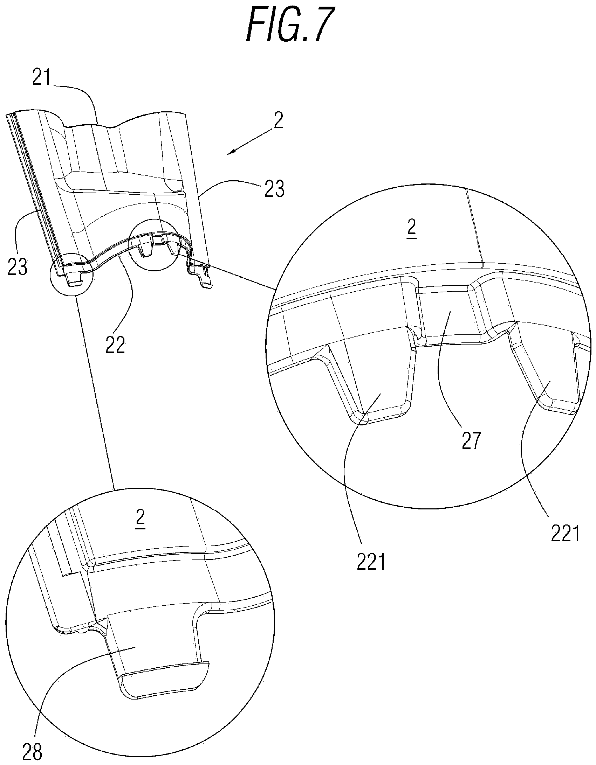

Also in this preferred embodiment of the improved aeroponic device of the invention, and as can be seen in Figures 5 and 7 and their enlarged details, the means for vertical connection comprise flanges 221 on the lower edge 22 of the part 2 flanking the cap 27, and ribs 231 on the side edges 23 of the part 2 and flanking the aforementioned tongue-and-groove assembly between the parts 2 as can be seen particularly in the enlarged detail of figure 4.

In the assembly of the parts 2 for forming the module 1, the ribs 231 of two laterally contiguous parts 2 are fitted between the flanges 221 of a part 2 vertically contiguous to the two preceding parts 2, as can be seen particularly in the enlarged detail of figure 5, which contributes to maintaining the assembly of said parts 2.

Moreover, the improved aeroponic device of the invention comprises stiffening means enabled for providing a suitable rigidity to the module 1.

In this preferred embodiment, the stiffening means comprise an internal structure or frame inside the module 1, said internal structure being connected simultaneously to the lower base 12 and the upper cover 13.

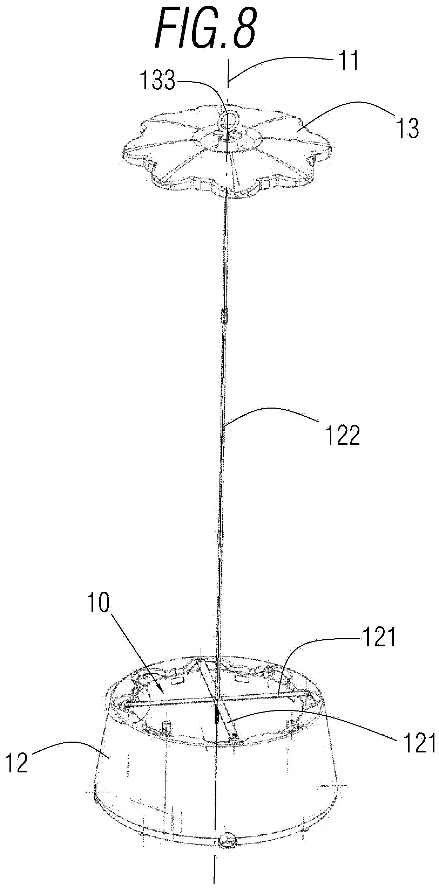

As can be seen in the view of figure 8 with the module 1 devoid of the parts 2, in this preferred embodiment of the improved aeroponic device of the invention, said internal structure or frame comprises a system of cables and a system of profiles.

The system of cables runs along the inside of the module 1 from the lower base 12 to the upper cover 13, and the system of profiles has a flat arrangement and extension and is mechanically fixed and extending in said lower base 12. Furthermore, the system of cables is mechanically fixed in the upper cover 13 and also mechanically fixed in relation to the lower base 12 through the same system of profiles.

As can be seen in figure 8, said system of profiles comprises at least two profiles 121 extending along the diameter in the lower base 12 and mechanically connected thereto and intersecting mutually and concentrically in relation to said lower base 12. The system of cables comprises a cable 122 mechanically connected to the mentioned intersection of the profiles and further contained in the axial axis 11 of the module 1 up to the upper cover 13.

The improved aeroponic device of the invention also comprises support means enabled to provide aerial support to the module 1. In this preferred embodiment, the support means comprise a ring 131 in the upper cover 13 of the module 1. As can also be seen in Figure 8, the ring 131 can also be in mechanical connection with the cable 122.

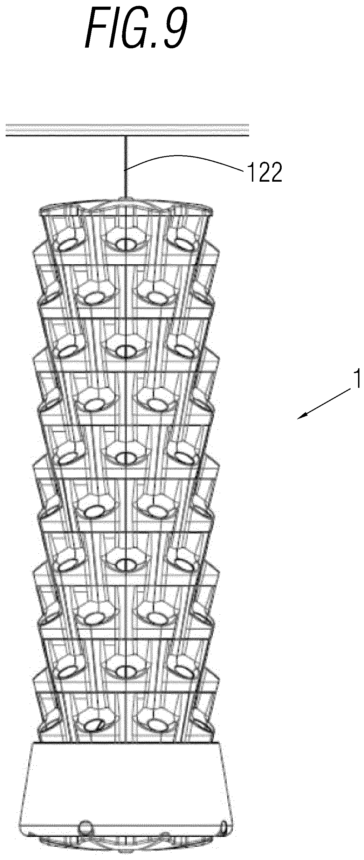

In other preferred embodiments, the system of cables or the cable 122, can even extend beyond the upper cover 13, as can be seen in figure 9, and therefore can also be included in the support means of the improved aeroponic device of the invention, for applications in which the aerial support thereof is required, and even the incorporation of means to provide a periodic rotation of the improved aeroponic device of the invention.

In other preferred embodiments, the internal structure or frame of the stiffening means may comprise longitudinal rods, simultaneously screwed at the ends or tips thereof to the lower base 12 and to the upper cover 13, thus ensuring the cohesion of the entire module 1.

Moreover, the improved aeroponic device of the invention comprises water and/or nutrient distribution means for the aeroponic cultivation of the plants arranged in the openings 24 of the parts 2.

Said water and/or nutrient distribution means comprise a reservoir 10 enabled in the lower base 12 of the module 1, as can be seen in figure 8, which allows excess water to accumulate in the lower base 12 to be reused.

The water and/or nutrient distribution means also comprise a fluid drive pump enabled for driving until the upper region of the module 1, and means for pouring fluid by gravity through the inside of the module 1, all of which may constitute an example of a permanent irrigation circuit.

The improved aeroponic device of the invention can incorporate means for the automatic regulation of time and flow rates for using the water and/or nutrient distribution means, depending on the season, the crop type, etc.

The improved aeroponic device of the invention can also incorporate means for wired or wireless interconnection of said means for the automatic regulation of time and flow rates with other means for automatic control, such as computer programmes that can be executed on mobile devices or computers, for interaction by the user, locally or remotely.

The improved aeroponic device of the present invention substantially improves the state of the art in terms of optimising water and nutrient consumption without detracting from proper cultivation conditions for various types of vegetables and plants, both in a domestic and a professional setting.

The improved aeroponic device of the present invention provides suitable sealing conditions, as well as a rigid and sound assembly, so that it can support all the plant elements to be cultivated in said device.

The details, shapes, dimensions, and other secondary elements, as well as the materials used in manufacturing the improved aeroponic device of the invention, may be suitably replaced with others that are technically equivalent and do not depart from the essential nature of the invention or from the scope defined by the claims included below.

## Claims

1. An improved aeroponic device, **characterised in that** it comprises a module (1) having a considerably cylindrical geometry with the axial axis (11) thereof being arranged vertically when in use, with a lower base (12) and an upper cover (13), the side surface thereof being formed by a mutual assembly of a plurality of parts (2) limited by an upper edge (21), a lower edge (22), and side edges (23), and parts (2) being mutually arranged in a contiguous manner with other parts (2) in contact with the edges thereof and with said parts being mutually connected and assembled on the edges thereof, all of this generating an inner space in said module (1); said parts (2) being equipped with a through opening (24) into said module (1), said opening (24) being arranged such that its direction of entry in relation to the inner space of the module (1) has an obtuse, oblique angle of incidence in relation to the axial axis (11) of the module (1); so that for the assembly thereof, said parts (2) are mutually equipped with means for horizontal connection and simultaneously with other means for vertical connection, which are enabled to provide sealing properties; the openings (24) of the parts (2) of the module (1) being enabled for arranging therein aeroponically cultivated plants; wherein the means for horizontal connection have a tongue-and-groove arrangement and are arranged on the side edges (23) of the parts (2), said tongue-and-groove assembly being arranged towards the inside of the module (1) and extending longitudinally and vertically.

2. The improved aeroponic device according to claim 1, wherein the means for horizontal connection comprise a longitudinal and vertical male projection (25) on a side edge (23) of a part (2), and at the same time a longitudinal and vertical female recess (26) on another side edge (23) of another part (2) which is horizontally contiguous, the male projection (25) and the female recess (26) being mutually arranged for the fitting of the male projection (25) into the female recess (26), said fitting generating the tongue-and-groove arrangement.

3. The improved aeroponic device according to claim 2, wherein the longitudinal male projection (25) has a bulge (251) extending in the longitudinal dimension thereof, and the female recess (26) has a hollowing (261) also extending in the longitudinal dimension thereof, such that the bulge (251) is also fitted into the hollowing (261).

4. The improved aeroponic device according to any of the preceding claims, wherein the means for vertical connection comprise a cap (27) centrally arranged on the lower edge (22) of the part (2) and enabled to cover the upper end of the longitudinally and vertically extending tongue-and-groove assembly of two other parts (2) which are in a lower position and horizontally contiguous to one another.

5. The improved aeroponic device according to any of the preceding claims, wherein the means for vertical connection comprise projecting tabs (28) on the lower edge (22) of the part (2) and an anchoring (29) arranged on the upper edge (21) of another vertically contiguous part (2), so that the tabs (28) and the anchorages (29) are mutually enabled to fit with one another by way of clipping.

6. The improved aeroponic device according to claim 5, wherein in the means for vertical connection, the anchoring (29) is arranged on the upper edge (21) of a part (2) in the central position thereof, and the tabs (28) are arranged at the ends of the lower edge (22) of another part (2) arranged in an upper position, so that the anchoring (29) is mutually enabled for simultaneously fitting two tabs (28) of two other parts (2) which are arranged in an upper position and in turn horizontally contiguous to one another.

7. The improved aeroponic device according to claim 4, wherein the means for vertical connection comprise flanges (221) on the lower edge (22) of the part (2) and flanking the cap (27), and ribs (231) on the side edges (23) of the part (2) flanking the tongue-and-groove assembly, so that in a condition of use, the ribs (231) of two laterally contiguous parts (2) are fitted between the flanges (221) of a part (2) arranged at the top in relation to the two preceding parts (2).

8. The improved aeroponic device according to any of the preceding claims, comprising stiffening means enabled to provide rigidity to the module (1).

9. The improved aeroponic device according to claim 8, wherein the stiffening means comprise an internal structure inside the module (1).

10. The improved aeroponic device according to claim 9, wherein said internal structure is connected simultaneously to the lower base (12) and the upper cover (13).

11. The improved aeroponic device according to claim 10, wherein said internal structure comprises a system of cables and a system of profiles; such that the system of cables runs along the inside of the module (1) from the lower base (12) to the upper cover (13); and the system of profiles has a flat arrangement and extension and is fixed and extending in said lower base (12); the system of cables further being fixed in the upper cover (13) and also fixed in relation to the lower base (12) through the same system of profiles.

12. The improved aeroponic device according to claim 11, wherein the system of profiles comprises at least two profiles (121) extending along the diameter in the lower base (12) and intersecting mutually and concentrically in relation to said lower base (12); and the system of cables comprises a cable (122) connected to the mentioned intersection of the profiles and further contained in the axial axis (11) of the module (1) up to the upper cover (13).

13. The improved aeroponic device according to claim 10, wherein the internal structure of the stiffening means comprises longitudinal rods, simultaneously screwed at the ends or tips thereof to the lower base (12) and to the upper cover (13).

14. The improved aeroponic device according to any of the preceding claims, comprising support means enabled to provide aerial support to the module (1).

15. The improved aeroponic device according to claim 14, wherein the support means comprise a ring (131) in the upper cover (13) of the module (1).

16. The improved aeroponic device according to claim 15 when it depends on claim 12, wherein the ring (131) is also connected to the system of cables.

17. The improved aeroponic device according to claim 14 when it depends on claim 11, wherein the system of cables extends and goes through the upper cover (13) and is included in the support means.

18. The improved aeroponic device according to any of the preceding claims, comprising water and/or nutrient distribution means.

19. The improved aeroponic device according to claim 18, wherein the water and/or nutrient distribution means comprise a reservoir (10) in the lower base of the module (1).

20. The improved aeroponic device according to claim 18 or 19, wherein the water and/or nutrient distribution means comprise a fluid drive pump enabled for driving until the upper region of the module (1).

21. The improved aeroponic device according to claim 18 or 19 or 20, wherein the water and/or nutrient distribution means comprise means for pouring fluid by gravity through the inside of the module (1).

22. The improved aeroponic device according to any of the preceding claims, which incorporates means for the periodic rotation of the module (1).

23. The improved aeroponic device according to any of the preceding claims, which incorporates means for the automatic regulation of time and flow rates for using the water and/or nutrient distribution means.

24. The improved aeroponic device according to claim 23, which incorporates means for wired or wireless interconnection of said means for the automatic regulation of time and flow rates with other means for automatic control.
